**Europäisches Patentamt**

**European Patent Office**

**Office européen des brevets**

(11) Veröffentlichungsnummer: **0 046 502**

**A1**

## (12) EUROPÄISCHE PATENTANMELDUNG

(21) Anmeldenummer: **81105560.7**

(22) Anmeldetag: **15.07.81**

(51) Int. Cl.³: **C 08 F 279/02**
//(C08F279/02, 212/00)

(30) Priorität: **27.08.80 DE 3032260**

(43) Veröffentlichungstag der Anmeldung:
**03.03.82 Patentblatt 82/9**

(84) Benannte Vertragsstaaten:
**BE DE FR GB IT NL SE**

(71) Anmelder: **BASF Aktiengesellschaft**
**Carl-Bosch-Strasse 38**
**D-6700 Ludwigshafen(DE)**

(72) Erfinder: **Jenne, Helmut, Dr.**
**Grosser Moench 6**
**D-6905 Schriesheim(DE)**

(72) Erfinder: **Gausepohl, Hermann, Dr.**
**Neuweg 10**
**D-6704 Mutterstadt(DE)**

(72) Erfinder: **Mittnacht, Hans, Dr.**
**Zinkgraefstrasse 44**
**D-6940 Weinheim(DE)**

(54) Verfahren zur kontinuierlichen Herstellung von mit Kautschuk modifizierten Polymerisaten von Vinylaromaten.

(57) Die Erfindung betrifft ein Verfahren zu kontinuierlichen Herstellung von mit Kautschuk modifizierten Polymerisaten von Vinylaromaten, wobei man ein Gemisch, das eine monomere aromatische Vinylverbindung und ein kautschukartiges, überwiegend aus 1,3-Dienen aufgebautes Polymerisat enthält, in Gegenwart von Acyl- oder Diacylperoxiden als Radikalinitiatoren in Mengen von $0,5 \cdot 10^{-2}$ bis $5 \cdot 10^{-2}$ Mol.%, bezogen auf Monomeres, und Mercaptanen als Kettenüberträgern umsetzt. Dabei wird ein Verhältnis der Molzahlen von Radikalinitiatoren zum Kettenüberträger im Bereich von 3,4 bis 0,1 eingestellt. Die Umsetzung erfolgt bei erhöhter Temperatur in zwei oder mehr Verfahrensstufen in solcher Weise, daß die Viskositätszahl (bestimmt in 0,5-gew.%iger Lösung in Toluol bei 23°C) des die Matrix bildenden Polymerisats aus den vinylaromatischen Monomeren zwischen 65 und 45 ml/g liegt.

Das erhaltene Polymerisat wird in einer Entgasungszone von vinylaromatischen Monomeren und gegebenenfalls von Lösungsmitteln befreit und wird zur Herstellung von Formteilen durch Spritzgießen verwendet.

BASF Aktiengesellschaft                      O.Z. 0050/034627

Verfahren zur kontinuierlichen Herstellung von mit Kautschuk modifizierten Polymerisaten von Vinylaromaten

Die Erfindung betrifft ein kontinuierliches Verfahren zur Herstellung von mit Kautschuk modifizierten Polymerisaten von Vinylaromaten, die Viskositätszahlen im Bereich von 65 bis 45 ml/g aufweisen. Diese Polymerisate werden in Masse oder Lösung in zwei oder mehr Verfahrensstufen unter Rühren und in Gegenwart von Radikalinitiatoren und Mercaptanen als Kettenüberträger hergestellt.

Zum Stand der Technik nennen wir
(1)   US-PS 3 903 202
(2)   US-PS 3 243 481
(3)   DE-OS 18 02 365
(4)   DE-OS 26 13 352.

Die kontinuierliche Herstellung von schlagfestem Polystyrol in zwei, drei oder mehreren Reaktoren ist ebenso bekannt wie die Verwendung von Kettenüberträgern zur Einstellung des Molekulargewichts [vgl. (1) bzw. 2)].

Möglichkeiten, die Fließfähigkeit von Styrolpolymerisaten zu verbessern, sind nicht neu. Im Prinzip bieten sich hierfür zwei Möglichkeiten an, dieses Ziel zu erreichen.

Zum einen läßt sich die Fließfähigkeit durch Verwendung von Gleitmitteln erhöhen [vgl. (3)].

Nach der Lehre von (3) sollen wenigstens 13 Gew.% Naturvaseline der Polymermasse zugesetzt werden. Durch den Vaselinezusatz wird jedoch der Erweichungspunkt der Formmasse erniedrigt; es kommt außerdem zu Schmiermittel-

Vo/BL

ausscheidungen, die zu verlängerten Zykluszeiten beim Spritzgießen führen. Außerdem sind die hohen Gleitmittelzusätze wegen ihrer Migrationstendenz in lebensmittelrechtlicher Hinsicht nicht unbedenklich.

Zum anderen läßt sich durch Erniedrigung des Molekulargewichts des Polymeren der die Matrix aufbauenden vinylaromatischen Monomeren die Fließfähigkeit erhöhen. Auch dieses Verfahrensprinzip ist bekannt. Es waren diesem Verfahren jedoch enge Grenzen gesetzt, da unterhalb eines bestimmten Mindestmolekulargewichts das mechanische Niveau solcher Produkte drastisch abfällt.

Es bestand daher die Aufgabe, Produkte mit hoher Fließfähigkeit unter Erhaltung des mechanischen Niveaus und üblicher Erweichungspunkte zu entwickeln.

Diese Aufgabe wird durch die Maßnahmen im kennzeichnenden Teil des Anspruches gelöst. Die Erfindung betrifft ein Verfahren zur kontinuierlichen Herstellung von mit Kautschuk modifizierten Polymerisaten von Vinylaromaten, wobei man ein Gemisch, das

a1)   mindestens eine monomere aromatische Vinylverbindung und

a2)   mindestens ein kautschukartiges, überwiegend aus 1,3-Dienen aufgebautes Polymerisat, in einem Anteil von 3 bis 16 Gew.%, bezogen auf Monomere(s), sowie

a3)   gegebenenfalls ein Lösungsmittel enthält,

in Gegenwart von

b)   Radikalinitiatoren und

c)   Mercaptanen als Kettenüberträgern

bei Temperaturen im Bereich von 80 bis 180°C in zwei oder mehr Verfahrensstufen unter Rühren in solcher Weise umsetzt,

daß die Viskositätszahl, bestimmt in 0,5-gew.%iger Lösung in Toluol bei 23°C, des die Matrix bildenden Polymerisats aus den vinylaromatischen Monomeren a1) zwischen 65 und 45 ml/g liegt,

das erhaltene Polymerisat in einer Entgasungszone von vinylaromatischen Monomeren und gegebenenfalls von Lösungsmitteln befreit und letztere in den Prozeß zurückführt, dadurch gekennzeichnet, daß man als Radikalinitiatoren b) Acyl- oder Diacylperoxide in Mengen von $0,5 \cdot 10^{-2}$ bis $5 \cdot 10^{-2}$ Gew.%, bezogen auf Monomere(s) verwendet, die Halbwertszeiten, $\tilde{T}_{1/2}$, bei 115°C von nicht mehr als 10 Stunden, aufweisen

und daß man ferner das Verhältnis der Molzahlen von Radikalinitiator b) zum Kettenüberträger c) im Bereich von 3,4 bis 0,1 einstellt.

Die kontinuierliche Herstellung von mit Kautschuk modifizierten Polymerisaten von Vinylaromaten ist insbesondere in (2) hinreichend beschrieben (vgl. das Verfahrensprinzip Kessel-Turmkaskade), so daß bezüglich der Durchführung des kontinuierlichen Verfahrens auf diese Druckschrift und bezüglich der zwei Reaktoren aufweisenden Verfahren auf (1) verwiesen werden kann.

Als aromatische Vinylverbindungen kommen für das erfindungsgemäße Verfahren Styrol, sowie dessen Derivate wie $\alpha$-Methylstyrol, o-, m-, p-Methylstyrol, 2,4-Dimethylstyrol bzw. t-Butylstyrol in Betracht. Bevorzugt wird Styrol alleine verwendet.

An das kautschukartige, überwiegend aus 1,3-Dienen aufgebaute Polymerisat werden keine besonderen Anforderungen gestellt. Es eignen sich sowohl natürliche als auch synthetische Polybutadiene, gleichfalls Polyisoprenkautschuke oder auch Styrol-Butadien-Blockcopolymerisate von Typ SB bzw. Dreiblock-Copolymerisate vom Typ BSB oder SBS. Besonders bevorzugt werden Dienkautschuke angewendet, die ca. 10 Gew.% 1,2-Vinylanteile aufweisen sowie sogenannte medium-cis- bzw. high-cis-Typen, von denen letztere mehr als 96 Gew.% cis-Struktur aufweisen. Derartige Dienkautschuke sind im Handel erhältlich.

Das erfindungsgemäße Verfahren kann sowohl in Masse als auch in Lösung durchgeführt werden. Bei der Polymerisation in Masse wird der Kautschuk in dem(n) zu polymerisierenden vinylaromatischen Monomeren gelöst und dann die Polymerisation unter Zugabe von Initiatoren und/oder Reglern begonnen.

Als geeignete Lösungsmittel kommen Toluol, Xylol, Ethylbenzol, Methylethylketon oder Tetrahydrofuran in Frage. Die Lösungsmittel werden in Mengen von 2 bis 15 Gew.%, bezogen auf Monomere(s), angewendet. Besonders bevorzugt wird Ethylbenzol für das erfindungsgemäße Verfahren in den vorstehend genannten Mengen.

Als Kettenüberträger kommen die üblicherweise verwendeten Mercaptane mit 4 bis 18 C-Atomen in Betracht. Von den Mercaptanen haben sich besonders das n-Butylmercaptan, das n-Octylmercaptan sowie das n- oder t-Dodecylmercaptan sowie das Stearylmercaptan bewährt. Die Menge an Mercaptan beträgt in der Regel 0,01 bis 0,3 Gew.%, bezogen auf das vinylaromatische Monomere.

Die innerhalb des vorstehend genannten Bereiches zu wählende Menge muß in bestimmten Verhältnissen zu dem nachstehend noch beschriebenen Initiator stehen. Die ausgewählte Menge richtet sich ferner nach dem gewünschten Schmelzfluß der herzustellenden Polymerisate. Aus technischen Gründen (Dosiergenauigkeit, Einmischbarkeit) ist es zweckmäßig, den Kettenüberträger nicht in reiner Form, sondern gelöst in einem Lösungsmittel, wie Toluol, Ethylbenzol, Xylol, Methylethylketon oder zusammen mit einem Gleitmittel, wie Paraffinöl oder Butylstearat oder in einer kleinen Menge des Monomeren der gewünschten Reaktionszone zuzuführen.

Als Radikalinitiatoren b) für das erfindungsgemäße Verfahren kommen insbesondere die Acyl- oder Diacylperoxide in Frage. Diese sollen bei $115^{o}$C eine Halbwertszeit von nicht größer als 10 Stunden, vorzugsweise von nicht größer als 6 Stunden, aufweisen (vgl. Firmenschrift AKZO Chemie GmbH vom Sep. 1974, Tab. Seite 18).

Bevorzugt sind Benzoylperoxid, t-Butylperbenzoat, Dilauroylperoxid, t-Butylperoctoat, t-Butylperacetat, t-Butylperisopropylcarbonat, Diacetylperoxid, Dipropionylperoxid, Di-octanoylperoxid, Di-decanoylperoxid und t-Butylperpivalat. Von den genannten Verbindungen sind besonders bevorzugt das Dibenzoylperoxid und das t-Butylperbenzoat.

Die Radikalinitiatoren für das erfindungsgemäße Verfahren sollen in Mengen von $0,5 \cdot 10^{-2}$ bis $5 \cdot 10^{-2}$ Mol%, bezogen auf Monomere(s) angewendet werden, wobei die Absolutmenge des Initiators aus Gründen der Wärmeabfuhr und anderen Problemen nicht größer als $5 \cdot 10^{-2}$ Mol% sein sollte. Zur Erzielung einer hohen Schlagfestigkeit bei niedrigem Matrixmolekulargewicht, ist es wichtig, das Molzahlverhält-

nis zwischen Radikalinitiator b) und Regler c) im Bereich von 3,4 bis 0,1, bevorzugt in den Grenzen von 2,5 bis 0,3 zu halten. Unter dem Molzahlverhältnis von Initiator und Regler soll im Sinne der vorliegenden Erfindung die nachstehende Definition gelten:

$$\frac{[J] \, M_R}{M_J \, [R]} \approx 3,4 - 0,1$$

wobei

[J], [R] = die Konzentration des Radikalinitiators bzw. Reglers in Gew.% und

$M_J$, $M_R$ die Molekulargewichte des Radikalinitiators bzw. Reglers bedeuten.

Dem Fachmann ist es bekannt, wie er die erste und alle weiteren Verfahrensstufen durchzuführen hat. Es ist ferner bekannt, daß bezüglich des Rührens bei mehr als zwei Reaktoren aufweisenden Verfahren die Führung der zweiten Verfahrensstufe kritisch ist. Auch die in den verschiedenen Verfahrensstufen anzuwendenden Temperaturen sowie die Verweilzeiten sind dem Fachmann bekannt, um zu Produkten mit den Viskositätszahlen der Matrix von 65 bis 45 ml/g, bzw. den insbesondere bevorzugten Viskositätszahlen von 62 bis 50 ml/g zu gelangen.

Die Polymerisationstemperaturen liegen im Bereich von 80 bis 180°C, wenn alle Verfahrensstufen berücksichtigt sind. In der Trockenstufe bzw. Entgasungsstufe werden sogar höhere Temperaturen angewendet. Während der Polymerisation, oder vor der Verarbeitung der nach dem erfindungsgemäßen Verfahren erhaltenen Polymerisate, können übliche Zusatzstoffe, wie innere Gleitmittel, Antioxidantien oder UV-Stabilisatoren, sowie Schmiermittel, Füllstoffe u.dgl. zugesetzt werden.

Die erfindungsgemäßen Formmassen können nach den bekannten Verfahren der Thermoplastverarbeitung bearbeitet werden, also z.B. durch Extrudieren, Spritzgießen, Kalandrieren, Hohlkörperblasen, Pressen oder Sintern; besonders bevorzugt werden aus den nach dem erfindungsgemäßen Verfahren hergestellten Formmassen Formteile durch Spritzgießen hergestellt.

Die in den Beispielen und Vergleichsversuchen aufgeführten Produkteigenschaften wurden wie folgt gemessen:

1.  Viskositätszahl
    Ca. 2 g des Produktes werden in einer Mischung aus Methyläthylketon und Aceton (60:40) "gelöst". Dann wird das Gel mit einer Zentrifuge bei 20 000 g abgeschleudert, die überstehende Lösung abdekantiert und diese in der 3-fachen Menge Methanol unter Rühren ausgefällt. Der abfiltrierte Feststoff wird getrocknet und an diesem die Viskositätszahl in einer 0,5%igen Lösung von Toluol bei 23°C nach DIN 53 726 bestimmt.

2.  Der Erweichungspunkt nach Vicat, Methode B, wird nach DIN 53 460 bestimmt.

3.  Der Schmelzindex wird bei 200°C und 5 kg Belastung nach DIN 53 735 bestimmt ($MFI_5^{200}$-Wert).

4.  Die Lochkerbschlagzähigkeit, $a_{KL}$ [kJ/m$^2$] wird nach dem DIN-Entwurf auf Beschluß des Fachnormenausschusses Kunststoffe 4.3 vom März 1975, in Vorbereitung, bestimmt.

Die Erfindung wird nachstehend anhand von Beispielen und Vergleichsversuchen näher erläutert. Alle angegebenen Teile und Prozente beziehen sich, sofern nichts anderes vermerkt ist, auf das Gewicht.

Beispiel 1

6,4 Teile Polybutadien vom medium-cis-Typ wurden in 82,82 Teilen Styrol und 6 Teilen Ethylbenzol gelöst. Dann wurde die Lösung mit 4,5 Teilen Paraffinöl, 0,12 Teilen Irganox 1076, und 0,085 % tert.-Dodecylmercaptan sowie 0,05 % Dibenzoylperoxid, jeweils bezogen auf Styrol, versetzt.

Diese Mischung wurde in einem kontinuierlichen Prozeß in Reaktionskaskade aus 4 Reaktoren (2 Kessel, 2 Türme) mit einem Durchsatz von 4 l/h polymerisiert. Die Temperaturen betrugen im ersten Reaktor $74^\circ C$, im 2. Reaktor $130^\circ C$, im 3. Reaktor $132^\circ C$ und im 4. Reaktor $150^\circ C$. In allen Reaktoren wurde gerührt. Die ca. 80%ige Polymerlösung wurde schließlich in einer Entgasungszone vom Lösungsmittel und restlichen Styrol befreit.

VZ:       61.9 ml/g
MFI:      14.2 g/10'
VSP/B:    $85^\circ C$
$a_{KL}$:       11.5 kJ/m$^2$

Beispiel 2

Das Beispiel 1 wurde mit 0.1 % Dibenzoylperoxid, bezogen auf Styrol, wiederholt. Die Temperaturen betrugen in Abweichung von Beispiel 1 im 1. Reaktor $65^\circ C$, im 2. Reaktor $100^\circ C$, im 3. Reaktor $126^\circ C$ und im 4. Reaktor $153^\circ C$.

VZ: 56.3 ml/g
MFI: 21.3 g'/10'
VSP/B: 85.5°C
$a_{KL}$: 11.1 kJ/m$^2$

Beispiel 3

Anstelle von Dibenzoylperoxid, wie im Beispiel 1 beschrieben, wurden 0.04 % tert.-Butylperbenzoat als Initiator eingesetzt. Die Temperaturen betrugen im 1. Reaktor 86°C, im 2. Reaktor 106°C und im 4. Reaktor 130°C.

VZ: 59.1 ml/g
MFI: 17.3 g/10'
VSP/B: 84.5°C
$a_{KL}$: 12.4 kJ/m$^2$

Beispiel 4

Anstelle von Dibenzoylperoxid, wie im Beispiel 1 beschrieben, wurden 0.065 % tert.-Butylperoctoat eingesetzt. Die Temperaturen betrugen im ersten Reaktor 71°C, im 2. Reaktor 107°C, im 3. Reaktor 112°C und im 4. Reaktor 125°C.

VZ: 58.3 ml/g
MFI: 18.1 g/10'
VSP/B: 85.0°C
$a_{KL}$: 11.7 kJ/m$^2$

Vergleichsversuch 1

Dieser Versuch soll belegen, daß Dicumylperoxid als Initiator nicht geeignet ist, obwohl die Absolutmenge des Initiators $5 \cdot 10^{-2}$ Mol% nicht überschreitet und auch das Verhältnis der Molzahlen von Initiator und Regler im beanspruchten Bereich liegt.

Anstelle von Dibenzoylperoxid, wie im Beispiel 1 beschrieben, wurden 0,0676 % Dicumylperoxid, bezogen auf Styrol, eingesetzt. Die Menge an tert.-Dodecylmercaptan betrug 0.085 %, bezogen auf Styrol. Es wurden folgende Temperaturen in den Reaktoren eingestellt.

1. Reaktor:    83$^{\circ}$C
2. Reaktor:   118$^{\circ}$C
3. Reaktor:   124$^{\circ}$C
4. Reaktor:   131$^{\circ}$C

Folgende Eigenschaften wurden gemessen:

VZ:      60.2 ml/g
MFI:     13.4 g/10'
VSP/B:   84.5$^{\circ}$C
$a_{KL}$:      8.3 kJ/m$^2$

Die Zähigkeit der erhaltenen Formmasse liegt deutlich unterhalb des in den Beispielen 1 - 4 erhältlichen Niveaus.

Vergleichsversuch 2

Auch Di-tert.-butylperoxid eignet sich nicht als Initiator für das beanspruchte Verfahren, wie anhand dieses Versuchs deutlich gemacht wird.

Anstelle von Dibenzoylperoxid, wie im Beispiel 1 beschrieben, wurden 0.036 % Di-tert.-butylperoxid, bezogen auf Styrol, eingesetzt.

Reaktor 1:    91°C
Reaktor 2:   121°C
Reaktor 3:   130°C
Reaktor 4:   135°C

VZ:      57.3 ml/g
MFI:     17.2 g/10'
VSP/B:   89°C
$a_{KL}$:     7.1 kJ/m$^2$

Vergleichsversuch 3

Erhöht man die Menge an Dibenzoylperoxid gemäß Beispiel 1
auf 0,15 %, bezogen auf Styrol, so werden Produkte mit
niedrigen Lochkerbschlagzähigkeiten erhalten.

Der Mercaptangehalt betrug in diesem Versuch 0,06 %.

VZ:      58.5 ml/g
MFI:     19,3 g'/10
VSP/B:   84°C
$a_{KL}$:     3.7 kJ/m$^2$

Vergleichsversuch 4

Führt man Beispiel 1 mit 0.02 % Dibenzoylperoxid und
0,17 % tert.-Dodecylmercaptan, bezogen auf Styrol durch,
so beträgt das Molzahlenverhältnis 0.098. Die Temperaturen
lagen im 1. Reaktor bei 87°C, im 2. Reaktor bei 126°C, im
3. Reaktor bei 133°C und im 4. Reaktor bei 155°C. Unter
diesen Bedingungen erhält man eine Viskositätszahl von
60.2 ml/g. Der Schmelzindex von 13.5 g/10' und der Erweichungspunkt von 85°C sind ebenfalls vergleichbar. Jedoch
beträgt die Lochkerbschlagzähigkeit nur 7.5 kJ/m$^2$.

"Dieser Versuch zeigt, daß man Produkte mit einem niedrigen mechanischen Niveau erhält, wenn das Molzahlenverhältnis von Initiator und Regler außerhalb des beanspruchten Bereichs liegt.

Die Ergebnisse der in den Beispielen und Vergleichsversuchen verwendeten Mengen an Starter und Regler, jeweils in Mol%, das Molzahlverhältnis von Starter und Regler sowie die Halbwertszeit, $T_{1/2}$, der verwendeten Starter bei 115°C sind in der nachstehenden Tabelle angegeben.

Tabelle

| Beispiele | Startermenge in (Mol)% | Reglermenge in (Mol)% | Molzahlverhältnis Starter/Regler | Halbwertszeit $1/2$ bei $115^\circ$ C |
|---|---|---|---|---|
| 1 | 0,0215 | 0,0437 | 0,491 | 2 Min. |
| 2 | 0,0430 | 0,0437 | 0,981 | 2 Min. |
| 3 | 0,0214 | 0,0437 | 0,489 | 2 Min. |
| 4 | 0,0312 | 0,037 | 0,715 | 3 Min. |
| Vergleichsversuche | | | | |
| 1 | 0,0259 | 0,0437 | 0,594 | 12 Stunden |
| 2 | 0,0256 | 0,0437 | 0,585 | 30 Stunden |
| 3 | 0,0645 | 0,0308 | 1,472 | 2 Min. |
| 4 | 0,0086 | 0,0874 | 0,098 | 2 Min. |

Patentansprüche

1. Verfahren zur kontinuierlichen Herstellung von mit Kautschuk modifizierten Polymerisaten von Vinylaromaten, wobei man ein Gemisch, das

a1) mindestens eine monomere aromatische Vinylverbindung und

a2) mindestens ein kautschukartiges, überwiegend aus 1,3-Dienen aufgebautes Polymerisat, in einem Anteil von 3 bis 16 Gew.%, bezogen auf Monomere(s), sowie

a3) gegebenenfalls ein Lösungsmittel enthält

in Gegenwart von

b) Radikalinitiatoren und

c) Mercaptanen als Kettenüberträgern

bei Temperaturen im Bereich von 80 bis 180°C in zwei oder mehr Verfahrensstufen unter Rühren in solcher Weise umsetzt,

daß die Viskositätszahl, bestimmt in 0,5-gew.%iger Lösung in Toluol bei 23°C, des die Matrix bildenden Polymerisats aus den vinylaromatischen Monomeren a1) zwischen 65 und 45 ml/g liegt,

das erhaltene Polymerisat in einer Entgasungszone von vinylaromatischen Monomeren und gegebenenfalls von Lösungsmitteln befreit und letztere in den Prozeß zurückführt, <u>dadurch gekennzeichnet</u>, daß man als Radikalinitiatoren b) Acyl- oder Diacylperoxide in Mengen von $0,5 \cdot 10^{-2}$ bis $5 \cdot 10^{-2}$ Mol.%, bezogen auf Monomere(s) verwendet, die Halbwertszeiten, $\mathcal{T}_{1/2}$, bei $115^{\circ}$C von nicht mehr als 10 Stunden, aufweisen

und daß man ferner das Verhältnis der Molzahlen von Radikalinitiator b) zum Kettenüberträger c) im Bereich von 3,4 bis 0,1 einstellt.

2. Verwendung der Formmassen gemäß Anspruch 1 zur Herstellung von Formteilen durch Spritzgießen.

3. Formteile aus Formmassen gemäß Anspruch 1.

# EUROPÄISCHER RECHERCHENBERICHT

Europäisches Patentamt

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| DA | FR - A - 2 346 381 (BASF)<br>* Seite 8, Zeilen 3-7; Seite 10, Zeile 30 *<br>& DE - A - 2 613 352<br>-- | 1 |
| D | US - A - 3 903 202 (DON E. CARTER et al.)<br>* Anspruch 1; Spalte 11, Zeilen 34-56; Spalte 13, Zeilen 48-56 *<br>-- | 1 |
| A | FR - A - 1 463 671 (SHELL)<br>* Seite 4, rechte Spalte, Absatz 3 *<br>-- | |
| | GB - A - 1 121 885 (REXALL)<br>* Anspruch 1; Seite 6, Zeilen 82-115; Seite 7, Zeilen 5-19 *<br>& DE - A - 1 645 196<br>-- | 1 |
| | FR - A - 1 395 954 (REXALL)<br>* Seite 5, linke Spalte, Absätze 1,4; Seite 6, linke Spalte, Absatz 3 *<br>---- | 1 |

### KLASSIFIKATION DER ANMELDUNG (Int. Cl.3)

C 08 F 279/02//
(C 08 F 279/02
212/06)

### RECHERCHIERTE SACHGEBIETE (Int. Cl.3)

C 08 F 279/02
291/02

### KATEGORIE DER GENANNTEN DOKUMENTE

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 02-12-1981 | MEULEMANS |

EPA form 1503.1 06.78